# EUROPÄISCHE PATENTSCHRIFT

(11) **EP 2 240 987 B1**
(45) Veröffentlichungstag und Bekanntmachung des Hinweises auf die Patenterteilung: **04.12.2013**
(21) Anmeldenummer: 09707611.1
(22) Anmeldetag: 08.02.2009
(51) Int. Cl.: H02G 3/06, F16L 5/06, H01R 13/443, H01R 13/56, H01R 13/59, H01R 13/74, H01R 13/52

(54) **STECKVORRICHTUNG**
PLUG-IN DEVICE
DISPOSITIF A ENFICHAGE

(30) Priorität: 09.02.2008 DE 202008001842 U
(43) Veröffentlichungstag der Anmeldung: 20.10.2010
(73) Patentinhaber: Jacob Gmbh Elektrotechnische Fabrik, 71394 Kernen (DE)
(72) Erfinder: RECHT, Wolfgang, 71522 Backnang (DE); LANG, Norbert, 73614 Schorndorf (DE)
(74) Vertreter: Jendricke, Susann
(86) Internationale Anmeldenummer: PCT/DE2009/000163
(87) Internationale Veröffentlichungsnummer: WO 2009/097842

(56) Entgegenhaltungen:
- US-B1- 7 078 623

## Beschreibung

Die vorliegende Erfindung betrifft eine Steckvorrichtung zur Montage in einer Durchtrittsöffnung eines flächigen Bauteils, insbesondere einer Schaltschrankwand, mit einem Kopfteil zum Durchtritt durch die Durchtrittsöffnung, mit einem Gewindeteil zum Verbleib vor der Durchtrittsöffnung, mit einer auf das Gewindeteil aufschraubbaren Befestigungsmutter zur Festlegung der Steckvorrichtung im Randbereich der Durchtrittsöffnung, wobei das Kopfteil vom Kopfteil radial abragende, im wesentlichen gegenüberliegende Widerlagerbereiche aufweist, deren maximaler Abstand größer ist als die Querschnittsabmessung der Durchtrittsöffnung.

Elektrische Leitungen mit diversen Kabeln werden an elektrische Geräten und Einrichtungen, wie Maschinen und Schaltschränken, angeschlossen. Die elektrischen Leitungen sind in Kabelverschraubungen geführt und befestigt. Damit eine Verankerung in der Wand eines Schaltschrankes stattfinden kann, durchgreifen die Kabelverschraubungen teilweise eine gewindelose Wandöffnung der Maschine oder des Schaltschrankes und es erfolgt eine Verschraubung jenseits der Durchtrittsöffnung des flächigen Bauteils. Beim Festschrauben müssen sowohl an der diesseitigen Kabelverschraubung als auch an der jenseitigen Mutter Werkzeuge angesetzt werden, um die Kabelverschraubung sicher zu befestigen. Bei großformatigen Schaltschränken oder an schwer zugänglichen Orten, wie geschlossenen Schränken, kann dies wegen unzureichender Armlänge nicht von einer Person bewerkstelligt werden. Folge ist ein erhöhter Personalaufwand. Dieses Problem wird durch den Stand der Technik bereits grundsätzlich gelöst.

In der DE 10 2005 017 690 A1 ist ein Montageansatz beschrieben, der um den gesamten Umfang verteilte federnde Zungen aufweist. Die Zungen werden während des Durchtritts durch eine Durchtrittsöffnung zunächst radial nach innen bewegt, damit der Montageansatz die Durchtrittsöffnung passieren kann. Sobald der Kopfteil auf der anderen Seite der Durchtrittsöffnung austritt, entspannen sich die Zungen und die Unverlierbarkeit ist hergestellt. Über Zentrierflächen, die an der Randinnenfläche der Durchtrittsöffnung anliegen, wird der Montageansatz zentriert. Im Falle eines Kabelbruches oder sonstiger Schäden der elektrischen Leitung ist eine Demontage nur mit einem Spezialwerkzeug möglich. Das Spezialwerkzeug kann nur von der Gehäuseinnenseite auf den Montageansatz gesetzt werden, wenn zuvor das Kabel von der Klemmstelle gelöst ist.

Aus der DE 195 15 860 C2 ist eine Befestigungsvorrichtung bekannt, an deren Kopfteil um den Umfang verteilt Biegeeinheiten angeformt sind. Sobald das Kopfteil die Durchtrittsöffnung einer Wand passiert hat, wird mittels einer Verriegelungseinheit, die nur mit einem Spezialwerkzeug betätigt werden kann, eine Verformung bzw. Verbördelung der Biegeeinheiten vorgenommen. Im Resultat wird eine Wandmontage erhalten, die wegen des Spezialwerkzeuges sehr aufwendig ist und zudem nicht mehr gelöst werden kann. Eine Demontage der Befestigungsvorrichtung ist mit deren Zerstörung verbunden.

Auch die DE 20 2004 005 839 U1 befasst sich mit einer dort als Kabeleinführung bezeichneten Steckvorrichtung mit einem Klemmstutzen, an dem bewegliche Zungen angeordnet sind. Beim Einführen in die Wandöffnung werden die Zungen radial nach innen gedrückt, anschließend drückt ein von einer Hutmutter axial beaufschlagtes Verriegelungszwischenstück die jenseits der Wand positionierten Zungen radial nach außen. Problematisch ist hier, dass die Fixierung nur in axialer Richtung erfolgt, was dazu führen kann, dass die Kabeleinführung unzureichend abgedichtet ist. Zudem ist ein den Montageaufwand erhöhendes Zusatzbauteil erforderlich.

Die Druckschrift US 7078623 B1 zeigt bereits eine Steckvorrichtung mit Stutzen, Hutmutter und Befestigungsmutterradial, das mit seinem Kopfteil in eine Wandöffnung eingebracht wird. Zur Anlage an der Rückseite der Wand ragen gegenüberliegenden Widerlagerbereiche ab, deren maximaler Abstand größer ist als die Querschnittsabmessung der Durchtrittsöffnung. Die bekannte Steckvorrichtung ist dahingehend nachteilig, dass Feuchte in den Schaltschrank oder ein Maschinengehäuse oder dgl. je nachdem, an welchem Anschlußkasten die Steckvorrichtung montiert werden soll - eindringen kann

Ausgehend von diesem Stand der Technik liegt der Erfindung die Aufgabe zugrunde, eine Steckvorrichtung der in Rede stehenden Art anzugeben, die die Dichtung verbessert.

Die voranstehende Aufgabe wird durch die Merkmale des Patentanspruches 1 gelöst. Danach ist eine Steckvorrichtung der in Rede stehenden Art derart ausgestaltet, dass zwischen den Widerlagerbereichen angeordnete Abschnitte vorgesehen sind, deren maximaler Abstand kleiner ist als die Querschnittsabmessung der Durchtritts-öffnung und dass ein Dichtmittel vorgesehen ist, welches in Betriebsstellung sowohl die Befestigungsmutter als auch das flächige Bauteil, als auch den Bereich zwischen Gewindeteil und Kopfteil kontaktiert.

Erfindungsgemäß ist erkannt worden, dass die Dichtung verbessert werden kann, wenn ein Dichtmittel eingesetzt wird. Weiter ist erkannt worden, dass eine Zuverlässigkeit der Dichtung dann errreicht werden kann, wenn das Dichtmittel sich in Betriebsstellung Kontakt zu allen relevanten Bauteilen herstellt, die den Sitz der Steckvorrichtung in der Durchtrittsöffnung ermöglichen. So kontaktiert das Dichtmittel sowohl die Befestigungsmutter als auch das flächige Bauteil, als auch den Bereich zwischen Gewindeteil und Kopfteil.

In vorteilhafter Weise wird die Montage vereinfacht und die Steckvorrichtung kann im Bedarfsfall auch demontiert werden, wenn Widerlagerbereiche ausgebildet werden, die keiner irreversiblen Verformung unterliegen. Für den Durchtritt durch die Durchtrittsöffnung ist es ausreichend, wenn das Kopfteil in nur einer Dimension, bspw. Höhe oder Breite, den Querschnitt der Durchtrittsöffnung geringfügig unterschreitet, in der jeweils anderen Dimension jedoch nicht. Eine Vergrößerung des Kopfteils wird über den Querschnitt der Durchtrittsöffnung hinaus über zwei im wesentlichen gegenüberliegende, vom Kopfteil radial abragende Widerlagerbereiche realisiert, während die zwischen den Widerlagerbereichen angeordneten Abschnitte einen Abstand voneinander aufweisen, der kleiner ist als die Querschnittsabmessung der Durchtrittsöffnung. Da bei der erfindungsgemäßen Steckvorrichtung keine Widerlager durch Verformung ausgebildet werden, sondern diese voll funktionstüchtig am Kopfteil angeformt sind, kann die Steckvorrichtung jederzeit zerstörungsfrei demontiert werden. Auch hier ist nach dem für sich bekannten Lösen der Befestigungsmutter zunächst eine Schrägstellung zu realisieren, die die Rückführung des Kopfteils erlaubt. Ein weiterer Vorteil besteht darin, dass bei der erfindungsgemäßen Steckvorrichtung keinerlei Spezialwerkzeuge oder Verforrnungshilfen erforderlich sind.

Als besonders vorteilhaft sei hervorgehoben, dass mit der erfindungsgemäßen Steckvorrichtung die Montage und Demontage erleichtert wird, da nur an einer einzigen Gehäuseseite gearbeitet wird.

Natürlich kann eine so ausgebildete Steckvorrichtung - eben weil sie teilweise größere Abmessungen hat als der Querschnitt der Durchtrittsöffnung - nicht frontal in die Durchtrittsöffnung eingeführt werden, sondern es muss eine Schrägstellung eingenommen werden, wobei zunächst der eine Widerlagerbereich die Durchtrittsöffnung durchgreift und anschließend der andere Widerlagerbereich hindurchgeschwenkt wird. Mit der für sich bekannten, auf das Gewindeteil aufschraubbaren Befestigungsmutter wird dann die Steckvorrichtung im Randbereich festgelegt, wobei dann die Längsachsen der Steckvorrichtung und der Durchtrittsöffnung fluchten.

Nach einer zweckmäßigen Ausführungsform der erfindungsgemäßen Steckvorrichtung könnten die Widerlagerbereiche und die zwischen den Widerlagerbereichen angeordneten Abschnitte senkrecht zueinander angeordnet sein. Dies bietet sich allein schon wegen der in der Regel rotationssymmetrischen Ausbildung der Durchtrittsöffnung an. Die beiden radial abragenden Widerlagerbereiche könnten im Sinne eines Doppelhakens ausgebildet sein. Alternative Ausführungen der Widerlagerbereiche könnten Asymmetrien und / oder Ausnehmungen aufweisen. Bspw. könnten der obere und der untere Widerlagerbereich zusammen im Sinne eines Dreieckes oder einer H-Form vorliegen.

Eine besonders vorteilhafte Ausführungsform der erfindungsgemäßen Steckvorrichtung sieht vor, dass die Widerlagerbereiche durch die Stirnseite des Kopfteils ausgebildet sind. Beispielsweise könnte die Steckvorrichtung im Spritzgießverfahren hergestellt werden. Werden die Widerlagerbereiche durch die Stirnseite gebildet, erleichtert dies die Herstellung im Hinblick auf die Formgebung der Werkzeuge und die Entnahme des Formlings. Außerdem ist die Montage vereinfacht, da die Schrägstellung besser eingenommen werden kann, wenn die Widerlagerbereiche an der Stirnseite des Kopfteils ausgebildet sind. Im Abstand von der Stirnseite angeordnete Widerlagerbereiche verkomplizieren die Montage, da dann der Freiheitsgrad hinsichtlich der Schrägstellungsmöglichkeit kleiner wird.

Die Einführung des in einer Dimension größeren Kopfteils in die Durchtrittsöffnung des flächigen Bauteils könnte dadurch unterstützt werden, dass die Widerlagerbereiche eine vom Kopfteil weg konvergierende konische Außenfläche aufweisen, die sich an die Stirnfläche des Kopfteils anschließt.

Damit sich die Widerlagerbereiche im montierten Zustand gegen den rückseitigen Randbereich der Durchtrittsöffnung abstützen, könnten Abstützflächen vorgesehen sein, die sich senkrecht zur Längsachse der Steckvorrichtung erstrecken. Im montierten Zustand ist es erwünscht, dass die Widerlagerbereiche sich nicht nur über ihre Abstützflächen an der Rückseite unter Krafteinwirkung der Befestigungsmutter abstützen, sondern es ist erwünscht, dass auch ein Kontakt mit der Innenfläche der Durchtrittsöffnung hergestellt wird. Zur Anlage der Widerlagerbereiche an der Innenfläche der Durchtrittsöffnung könnten diese Zentrierflächen aufweisen, die sich parallel zur Längsachse der Steckvorrichtung erstrecken und im montierten Zustand an der Innenfläche der Durchtrittsöffnung anliegen.

Zur Realisierung einer Verdrehsicherung sowohl beim Aufschrauben der Befestigungsmutter als auch bei einer Demontage könnte die Abstützfläche und / oder die Zentrierfläche in vorteilhafter Weise eine höhere Rauigkeit aufweisen als das flächige Bauteil.

Da der maximale Abstand der zwei gegenüberliegenden, zwischen den Widerlagerbereichen angeordneten Abschnitte kleiner sein muss als die Querschnittsabmessung der Durchtrittsöffnung, allerdings auch eine einigermaßen vollständige Schließung der Durchtrittsöffnung erwünscht ist, könnten die zwischen den Widerlagerbereichen angeordneten Abschnitte eine ebene Außenfläche aufweisen. Die ebene Außenfläche ist dann durch den größtmöglichen Abstand zwischen den Abschnitten definiert, der aber immer noch geringfügig kleiner sein muss als die Abmessung der Durchtrittsöffnung. Ohne im selben Maße wie die Zentrierflächen der Widerlagerbereiche zu wirken, könnten sich die ebenen Außenflächen aber parallel zu den Zentrierflächen erstrecken und zumindest punktuell oder bereichsweise zur Anlage an die Innenfläche der Durchtrittsöffnung kommen.

Wenn die erfindungsgemäße Steckvorrichtung mit einer für sich bekannten Kabelverschraubung kombiniert ist, wirken Biegekräfte infolge des Gewichts der elektrischen Leitungen. Daher ist es von Vorteil, wenn die beiden gegenüberliegenden Widerlagerbereiche verschiedene Abmessungen und/oder Formgebungen aufweisen. So kann durch verschieden große Kontaktflächen oder Zentrierflächen, aber auch durch verschiedene Materialstärken unterschiedlich auf die angreifenden Kräfte reagiert werden. Zudem spielt die Formgebung auch in Hinblick auf die Ein- und Durchführung des Kopfteils in die / durch die Durchtrittsöffnung eine Rolle. Bereits geringfügige Unterschiede können große Wirkung entfalten.

Nach einer besonders bevorzugten Ausführungsform der erfindungsgemäßen Steckvorrichtung könnte das Kopfteil während der Montage und im montierten Zustand eine Oberseite und eine Unterseite ausbilden, wobei die beiden gegenüberliegenden Widerlagerbereiche an der Ober- bzw. Unterseite angeordnet sind. Alternativ wäre auch die Anordnung der sich zwischen den Widerlagerbereichen erstreckenden Abschnitte an der Ober- und Unterseite möglich, was zu einer etwas anderen Schrägstellung des Kopfteils in Bezug auf eine gedachte vertikale Achse beim Einführen in die Durchtrittsöffnung und zu einer bedürfnisgerechten Ausbildung der dann seitlich sitzenden Widerlagerbereiche führen würde.

Gemäß der besonders bevorzugten Ausführungsform, wobei das Kopfteil während der Montage und im montierten Zustand eine Oberseite und eine Unterseite ausbildet, könnte der im montierten Zustand obere Widerlagerbereich weniger stark vom Kopfteil abragen als der im montierten Zustand untere Widerlagerbereich. Hierdurch soll eine größere Stabilität der montierten Steckvorrichtung gerade im Hinblick auf die Biegebeanspruchung erreicht werden. Zudem geht es auch darum, wie das Kopfteil mit den beiden Widerlagerbereichen in die Durchtrittsöffnung eingeführt bzw. eingehakt wird. Als besonders günstig hat es sich erwiesen, den unteren, stärker abragenden Widerlagerbereich zuerst in Schrägstellung durch die Durchtrittsöffnung zu führen und dann den oberen Widerlagerbereich um eine Querachse im unteren Widerlagerbereich in die Durchtrittsöffnung einzuschwenken. Hier ist es aus Gründen der Geometrie von Vorteil, wenn der obere Widerlagerbereich eine etwas geringere Abmessung aufweist, damit beim Durchführen durch die Durchtrittsöffnung keinerlei Behinderung stattfindet. In diesem Zusammenhang käme bspw. die Dreieckform der beiden Widerlagerbereiche in Betracht. Ein Winkel der Dreieckform könnte den oberen Widerlagerbereich definieren, die beiden anderen Winkel könnten den unteren Widerlagerbereich definieren.

Wenn das Kopfteil die Durchtrittsöffnung passiert hat, wird durch das Anziehen der Befestigungsmutter Kraft auf die Widerlagerbereiche ausgeübt und diese an der Rückseite des flächigen Bauteils zur Anlage gebracht. Nach einer besonders bevorzugten Ausführungsform der erfindungsgemäßen Steckvorrichtung könnte der im montierten Zustand untere Widerlagerbereich eine von der Zentrierfläche in Richtung des Gewindeteils konvergierende Führungsfläche aufweisen. Die vor Beginn des Anschraubens noch locker in der Durchtrittsöffnung angeordnete Steckvorrichtung wird mittels der beim Anziehen wirkenden Führungsfläche in die gewünschte Anlageposition gebracht und die Innenfläche der Durchtrittsöffnung gelangt in Kontakt mit den Zentrierflächen und den Kontaktflächen der Widerlagebereiche. Die Führungsfläche könnte aber nicht nur beim Festlegen der Steckvorrichtung hilfreich sein, sondern auch beim Ein- und Durchführen des Kopfteils in die bzw. durch die Durchtrittsöffnung hindurch. Wenn der untere Widerlagerbereich zuerst in die Durchtrittsöffnung eingeführt wird, während der obere Widerlagerbereich vom flächigen Bauteil noch beabstandet ist, könnte dann die Führungsfläche dazu dienen, das Einschwenken des oberen Widerlagerbereiches vorzubereiten.

Die erfindungsgemäße Steckvorrichtung könnte in zwei grundsätzlichen Ausführungen vorliegen. Zum einen könnte sie Bestandteil einer für sich bekannten Kabelverschraubung bestehend aus Hutmutter, Stutzen, Lamellenkorb, Dichtungen etc. sein. Weiter ist auch eine Kombination der Steckvorrichtung mit einer Kabelverschraubung, an der statt einer als Hutmutter eine Mutter mit einem angeformten Biegeschutzteil vorgesehen ist, möglich. Zum anderen könnte die Steckvorrichtung als Verschluss ausgebildet sein.

Im Hinblick auf die Vermeidung des Lösens der Befestigungsmutter während des Anziehens der Hutmutter oder Mutter mit einem angeformten Biegeschutzteil könnten diese gegenläufige Gewinde aufweisen. Die Befestigungsmutter könnte ein Linksgewinde aufweisen, während die Hutmutter mit einem Rechtsgewinde ausgestattet sind. Mit den gegenläufigen Gewinden soll vermieden werden, dass sich die gesamte Vorrichtung beim Festdrehen der Hutmutter mitdreht.

Die erfindungsgemäße Steckvorrichtung könnte aus einem metallischen Werkstoff, aus Kunststoff oder aus Kombinationen daraus sowie auch aus weiteren Werkstoffen, wie bspw. Verbundwerkstoffen, gefertigt sein.

Nach einer bevorzugten Ausführungsform, die sich vor allem mit der Abdichtungsproblematik befasst, könnte in Betriebsstellung zwischen der Befestigungsmutter und dem flächigen Bauteil ein O-Ring wirken. Diese Ausführungsform erfährt eine erfinderische Qualität, wenn anstelle eines O-Ringes ein Dichtmittel vorgesehen ist, welches in Betriebsstellung sowohl die Befestigungsmutter als auch das flächige Bauteil, als auch den Bereich zwischen Gewindeteil und Kopfteil kontaktiert. Auf diese Weise wird ein Feuchteeintritt noch wirksamer verhindert.

Damit einerseits einer Verformung des Dichtmittels durch die Krafteinleitung der Befestigungsmutter entgegengewirkt werden kann und andererseits die Drehung der Befestigungsmutter durch das Dichtmittel nicht behindert wird, könnte das Dichtmittel nach einem besonders bevorzugten Ausführungsbeispiel an seiner zur Befestigungsmutter weisenden Seite einen reibungsvermindernden Bestandteil aufweisen. Das Dichtmittel könnte als ein mit Teflon oder Lack beschichteter Elastomerring oder Gummiring vorliegen. Alternativ könnte einem einfachen Dichtring aber auch eine Scheibe aus reibungsminderndem Werkstoff mit geringer Oberflächenrauigkeit zugeordnet werden. Im Fall einer Beschichtung könnte eine Scheibe oder Folie auf den Dichtring aufgeklebt oder aufvulkanisiert sein oder aber die Oberfläche des Gummirings könnte so behandelt und veredelt sein, dass die gewünschte Beschichtung entsteht.

Im Hinblick auf die Ausbildung lückenloser und dichter Kontaktflächen zwischen dem Dichtmittel und dem Bereich zwischen Gewindeteil und Kopfteil könnten diese aufeinander abgestimmt sein. Dies gilt für die Formgebung wie auch die Oberflächenausbildung. In Bezug auf die Formgestaltung wird ausgeführt, dass eine Montagevereinfachung erzielt werden kann, wenn der Bereich zwischen Kopfteil und Gewindeteil einen kreisförmigen Querschnitt aufweist, so dass das ringförmige Dichtmittel einfach übergestreift werden kann. Andere Ausgestaltungen im Hinblick auf eckige oder ellipsenförmige Formgebungen sind möglich, könnten aber die Kosten erhöhen oder die Montage verkomplizieren. Was für die Abstimmung des Dichtmittels und des Bereiches zwischen Kopf- und Gewindeteil gilt, gilt auch für die Kontaktflächen zum flächigen Bauteil und zur Befestigungsmutter. So könnte das Dichtmittel genau in eine Innenschulter der Befestigungsmutter passen und außerdem mit über seine entsprechend dorthin weisende Oberfläche mit dem flächigen Bauteil harmonieren. Mit dieser Rundumabdichtung ist sichergestellt, dass keine Feuchtigkeit in die Steckvorrichtung eindringen kann.

Die erfindungsgemäße Steckvorrichtung könnte neben der Anwendung im Bereich der Kabelverschraubungen auch im Bereich von Füllstandmessgeräten zur Anwendung kommen. Dabei befindet sich ein Messfühler, insbesondere ein Schwimmer, im Inneren eines Behälters und die erfindungsgemäße Steckvorrichtung ist an der Behälterwand, in deren Durchtrittsöffnung, dichtend installiert. Bei dieser Anwendung könnte die Steckvorrichtung einen Sensor enthalten, der mit dem Magneten des Schwimmers korrespondiert. Überall, wo etwas in Durchtrittsöffnungen dicht installiert werden soll, könnte die erfindungsgemäße Steckvorrichtung zum Einsatz kommen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung mehrerer Ausführungsbeispiele der Erfindung anhand der Zeichnung zu verweisen. In Verbindung mit der Erläuterung der angeführte Ausführungsbeispiele der Erfindung werden auch im allgemeinen bevorzugte Ausgestaltungen und Weiterbildungen der Lehre erläutert. In der Zeichnung zeigen
- Fig. 1: in teilweise längs geschnittener Darstellung eine Vorderansicht eines ersten Ausführungsbeispiels der erfindungsgemäßen Steckvorrichtung, ohne Hutmutter und Befestigungsmutter
- Fig. 2: eine Seitenansicht des Gegenstandes aus Fig. 1, mit Blick auf die Stirnseite der Steckvorrichtung
- Fig. 3: in teilweise längs geschnittener Darstellung eine Vorderansicht des Gegenstandes aus Fig. 1 in montiertem Zustand unter Einbeziehung des flächigen Bauteils,
- Fig. 4: in explosionsartiger Darstellung die Vorderansichten der einzelnen Bauteile des Gegenstandes aus Fig. 3.
- Fig. 5: eine Prinzipskizze zur Erläuterung eines Montageschrittes betreffend das Einschwenken des Kopfteils des Gegenstandes aus Fig. 1.
- Fig. 6: in explosionsartiger Darstellung die Vorderansichten der einzelnen Bauteile eines zweiten Ausführungsbeispiels der erfindungsgemäßen Steckvorrichtung (Verschluss),
- Fig. 7: in perspektivischer Darstellung den Gegenstand aus Fig. 6 in montiertem Zustand und
- Fig. 8: in perspektivischer Darstellung eines dritten Ausführungsbeispiels der erfindungsgemäßen Steckvorrichtung in montiertem Zustand.
- Fig. 9: in teilweise längs geschnittener Darstellung eine Vorderansicht eines vierten Ausführungsbeispiels der erfindungsgemäßen Steckvorrichtung,
- Fig. 10: in vergrößerter Darstellung ein Detail aus Fig. 9 und
- Fig. 11: in explosionsartiger Darstellung die einzelnen Bauteile des Gegenstandes aus Fig. 9.

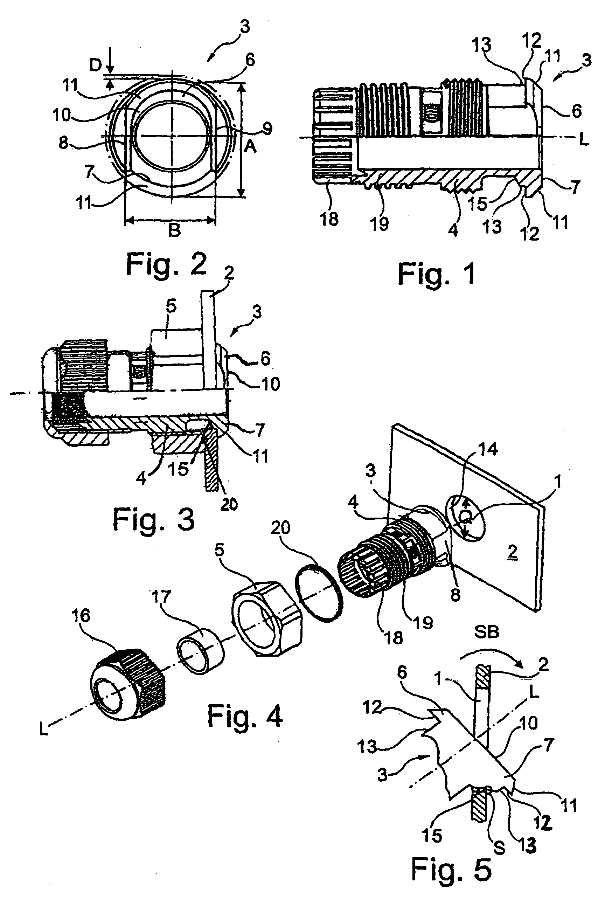

Die Figuren zeigen eine Steckvorrichtung zur Montage in einer Durchtrittsöffnung 1 eines flächigen Bauteils 2, das hier durch einen Ausschnitt aus einer Schaltschrankwand repräsentiert sein soll. Aus den Fig. 1 bis 6 geht hervor, dass die Steckvorrichtung einen Kopfteil 3 zum Durchtritt durch die Durchtrittsöffnung 1, einen Gewindeteil 4 zum Verbleib vor der Durchtrittsöffnung 1 und eine auf das Gewindeteil 4 aufschraubbare Befestigungsmutter 5 zur Festlegung der Steckvorrichtung im Randbereich der Durchtrittsöffnung 1 umfasst. Das Gewindeteil 4 umfasst nicht nur das Gewinde sondern auch den sich zum Kopfteil 3 erstreckenden Bereich, der im montierten Zustand vor dem flächigen Bauteil 2 verbleibt und kein Gewinde trägt.

Das Kopfteil 3 weist zwei gegenüberliegende, vom Kopfteil 3 radial abragende Widerlagerbereiche 6, 7 auf. Der maximale Abstand A der Widerlagebereiche 6, 7 ist größer als die Querschnittsabmessung Q der hier kreisförmigen Durchtrittsöffnung 1. Des weiteren sind zwei gegenüberliegende, zwischen den Widerlagerbereichen 6, 7 angeordnete Abschnitte 8, 9 vorgesehen, deren maximaler Abstand B kleiner ist als die Querschnittsabmessung Q der Durchtrittsöffnung 1. Die Fig. 2 zeigt deutlich, dass die Widerlagerbereiche 6, 7 und die zwischen den Widerlagerbereichen 6, 7 angeordneten Abschnitte 8, 9 senkrecht zueinander angeordnet und im Sinne eines Doppelhakens ausgebildet sind.

Aus der Prinzipskizze gemäß Fig. 5 ist ersichtlich, dass das Kopfteil 3 in Schrägstellung durch die Durchtrittsöffnung 1 hindurchführbar ist. Trotzdem hier der Abstand A zwischen den Widerlagerbereichen 6 und 7 größer ist als der Querschnitt Q der Durchtrittsöffnung 1, wird durch das schräge Einführen des Kopfteils 3 und die anschließendende Schwenkbewegung gemäß Pfeil SB um die mit S bezeichnete und hier skizzenhaft durch einen Kreis angedeutete Schwenkachse S die Montage realisiert. Der etwas weiter abragende Widerlagerbereich 7 wird hier zuerst in die Durchtrittsöffnung 1 eingebracht.

Die Widerlagerbereiche 6, 7 sind durch die Stirnseite 10 des Kopfteils 3 ausgebildet und weisen jeweils eine von der Steckvorrichtung weg konvergierende konische Außenfläche 11 auf. Des weiteren sind die Widerlagerbereiche 6, 7 jeweils mit einer Abstützfläche 12 und einer Zentrierfläche 13 versehen.

Die Abstützfläche 12 erstreckt sich senkrecht zur Längsachse L der Steckvorrichtung. In Fig. 3 ist gezeigt, dass sich die Abstützfläche 12 im montierten Zustand gegen den rückseitigen Randbereich der Durchtrittsöffnung 1 des flächigen Bauteils 2 abstützt. Die Zentrierfläche 13 erstreckt sich parallel zur Längsachse L und legt sich im montierten Zustand an der Innenfläche 14 der Durchtrittsöffnung 1 an. Die Abstützflächen 12 und die Zentrierflächen 13 weisen eine höhere Rauhigkeit auf als das flächige Bauteil 2.

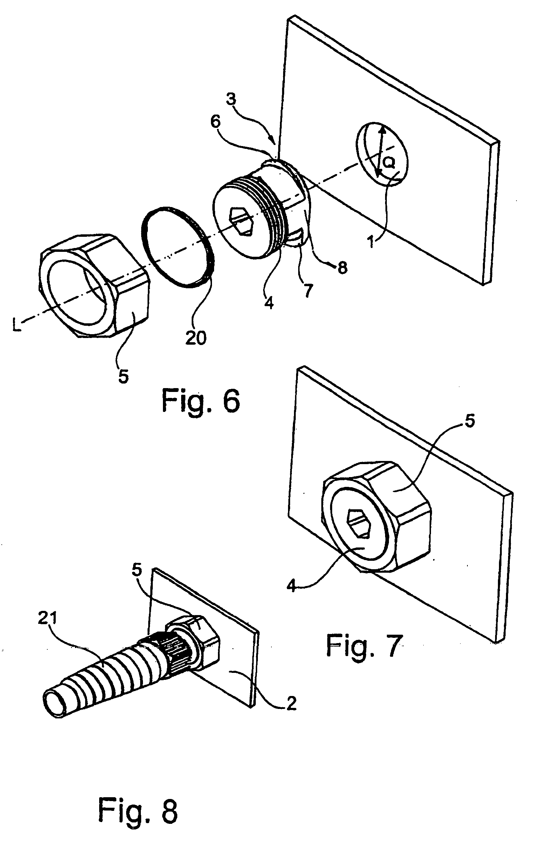

Die Figuren 4, 6 und 11 veranschaulichen, dass die zwischen den Widerlagerbereichen 6, 7 angeordneten Abschnitte 8, 9 eine ebene Außenfläche aufweisen. Bei den Fig. 4 und 6 erstreckt sich die ebene Außenfläche bis zum Gewindeteil 4.

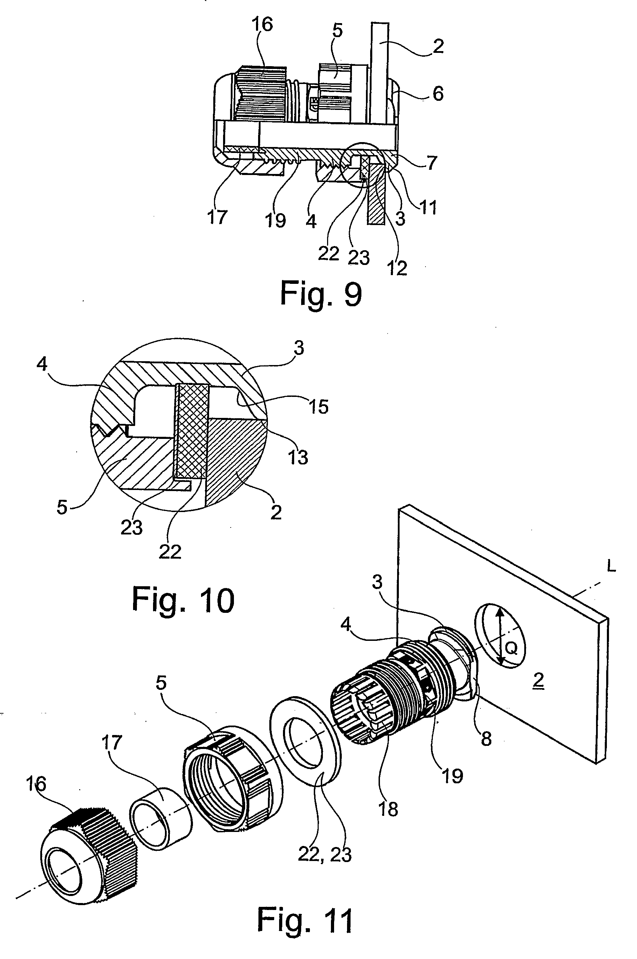

Wie sich aus den Fig. 2 und 9 ergibt, weisen die Widerlagerbereiche 6, 7 verschiedene Abmessungen und Formgebungen auf. In allen drei vorliegenden Ausführungsbeispielen definiert das Kopfteil 3 im montierten Zustand eine Oberseite, die durch den Widerlagerbereich 6 gebildet ist und eine Unterseite, die durch den Widerlagerbereich 7 gebildet ist. Der im montierten Zustand obere Widerlagerbereich 6 ragt weniger stark vom Kopfteil 3 ab als der im montierten Zustand untere Widerlagerbereich 7, der in Fig. 2 zur Verdeutlichung der unterschiedlichen Geometriedaten als Strichpunktlinie zu einem Kreis vervollständigt ist und wo mit D die Differenz der Abmessung bezeichnet ist. Es handelt sich also um eine im Hinblick auf die Montage und die Lastaufnahme beabsichtigte Asymmetrie der Widerlagerbereiche 6 und 7.

Der im montierten Zustand untere Widerlagerbereich 7 weist eine von der Zentrierfläche 13 in Richtung des Gewindeteils 4 konvergierende Führungsfläche 15 auf. Die Führungsfläche 15 trägt dazu bei, dass das Kopfteil 3, wenn die Befestigungsmutter 5 zur Festlegung der zunächst locker in der Durchtrittsöffnung 1 sitzenden Steckvorrichtung angezogen wird, in die richtige Position gelangt und die Zentrierflächen 13 sowie die Anstützflächen 12 ihre Wirkung entfalten können.

Mit 20 ist ein O-Ring bezeichnet, der nach dem Einhaken bzw. nach dem vollendeten Passieren des Kopfteils 3 durch die Durchtrittsöffnung 1 zunächst auf den Gewindeteil 4 aufgebracht wird, bevor die Befestigungsmutter 5 aufgeschraubt wird. Beim Anschrauben der Befestigungsmutter 5 gegen das flächige Bauteil 3 sorgt der O-Ring in diesem Bereich für eine staub- und wassergeschützte Abdichtung. Die Befestigungsmutter kann auch mit einer O-Ring-Nut ausgestattet sein, in die der O-Ring eingelegt wird.

Die Figuren 1 bis 5 zeigen, dass die Steckvorrichtung gemäß dem ersten Ausführungsbeispiel Bestandteil einer Kabelverschraubung, bestehend aus Hutmutter 16, Dichtung 17, Lamellenkorb 18, Stutzen 19, ist. Der Lamellenkorb 18 ist an den Stutzen 19 angespritzt und die Dichtung 17 ist in den Lamellenkorb 18 eingesetzt.

Die Figuren 6 und 7 zeigen das zweite Ausführungsbeispiel, wonach die Steckvorrichtung als Verschluss ausgebildet ist. Dort ist die Stirnseite des Gewindeteils 4 als Innensechskant ausgebildet, der zur Aufnahme eines Werkzeuges, insbesondere eines Sechskantschlüssels, dient. Das Kopfteil 3 ist hier geschlossen.

Bei dem in Fig. 8 gezeigten, dritten Ausführungsbeispiel ist die erfindungsgemäße Steckvorrichtung wie beim ersten Ausführungsbeispiel einstückig mit der Kabelverschraubung ausgebildet. Allerdings wurde hier keine Hutmutter 16, sondern eine Mutter mit Biegeschutz 21 auf die Kabelverschraubung aufgeschraubt.

Die Fig. 9 bis 11 zeigen ein viertes Ausführungsbesipiel der erfindungsgemäßen Steckvorrichtung, wobei ein Dichtmittel 22 in Form eines Elastomerrings vorgesehen ist, welches in Betriebsstellung sowohl die Befestigungsmutter 5 als auch das flächige Bauteil 2, als auch den Bereich zwischen Gewindeteil 4 und Kopfteil 3 kontaktiert. Das Dichtmittel 22 weist an seiner zur Befestigungsmutter 5 weisenden Seite einen reibungsvermindernden Bestandteil 23 auf, der hier in Form einer Teflonbeschichtung vorliegt.

Aus Fig. 11 ist zu entnehmen, dass das Dichtmittel 22 und der Bereich zwischen Gewindeteil 4 und Kopfteil 3 so aufeinander abgestimmt sind, dass eine lückenlose dichte Kontaktfläche ausbildbar ist. Hier ist der vorgenannte Abschnitt zylindrisch ausgebildet und weist einen Außenquerschnitt auf, der mit dem Innenquerschnitt des Dichtmittels 22 korrespondiert.

Die auf das Gewindeteil 4 aufzuschraubende Befestigungsmutter 5 für die Steckvorrichtung weist ein Linksgewinde auf. Die Hutmutter 16 und die Mutter mit Biegeschutz 21 für die Kabelverschraubung sind mit einem Rechtsgewinde versehen.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf die voranstehend erörterten Ausführungsbeispiele eingeschränkt ist. So kann das Dichtmittel 22 mit dem reibungsvermindernden Bestandteil 23 auch bei Steckvorrichtungen in Form von Verschlüssen oder mit Biegeschutzteilen oder als Bestanteil einer Messeinrichtung, insbesondere eines Schwimmschalters, eine Rolle spielen.

### Bezugszeichenliste

- 1: Durchtrittsöffnung
- 2: flächiges Bauteil
- 3: Kopfteil
- 4: Gewindeteil
- 5: Befestigungsmutter
- 6: Widerlagerbereich
- 7: Widerlagerbereich
- 8: Abschnitt
- 9: Abschnitt
- 10: Stirnseite
- 11: Außenfläche
- 12: Abstützfläche
- 13: Zentrierfläche
- 14: Innenfläche
- 15: Führungsfläche
- 16: Hutmutter
- 17: Dichtung
- 18: Lamellenkorb
- 19: Stutzen
- 20: O-Ring
- 21: Mutter mit Biegeschutz
- 22: Dichtmittel
- 23: reibungsvermindernder Bestandteil

- A: - Abstand zwischen 6, 7
- B: - Abstand zwischen 8, 9
- Q: - Querschnittsabmessung
- SB: - Schwenkbewegung
- S: - Schwenkachse
- L: - Längsachse
- D: - Differenz

## Patentansprüche

1. Steckvorrichtung zur Montage in einer Durchtrittsöffnung (1) eines flächigen Bauteils (2), insbesondere einer Schaltschrankwand, mit einem Kopfteil (3) zum Durchtritt durch die Durchtrittsöffnung (1), mit einem Gewindeteil (4) zum Verbleib vor der Durchtrittsöffnung (1), mit einer auf das Gewindeteil (4) aufschraubbaren Befestigungsmutter (5) zur Festlegung der Steckvorrichtung im Randbereich der Durchtrittsöffnung (1), wobei das Kopfteil (3) vom Kopfteil (3) radial abragende, im wesentlichen gegenüberliegende Widerlagerbereiche (6, 7) aufweist, deren maximaler Abstand (A) größer ist als die Querschnittsabmessung (Q) der Durchtrittsöffnung (1),
**dadurch gekennzeichnet,**
**dass** zwischen den Widerlagerbereichen (6, 7) angeordnete Abschnitte (8, 9) vorgesehen sind, deren maximaler Abstand (B) kleiner ist als die Querschnittsabmessung (Q) der Durchtrittsöffnung (1) und dass ein Dichtmittel (22) vorgesehen ist, welches in Betriebsstellung sowohl die Befestigungsmutter (5) als auch das flächige Bauteil (2), als auch den Bereich zwischen Gewindeteil (4) und Kopfteil (3) kontaktiert.

2. Steckvorrichtung nach Anspruch 1, **dadurch gekennzeichnet, dass** das Kopfteil (3) in Schrägstellung durch die Durchtrittsöffnung (1) hindurchführbar ist.

3. Steckvorrichtung nach Anspruch 1 oder 2, **dadurch gekennzeichnet, dass** die Widerlagerbereiche (6, 7) und die zwischen den Widerlagerbereichen (6, 7) angeordneten Abschnitte (8, 9) senkrecht zueinander angeordnet sind.

4. Steckvorrichtung nach einem der Ansprüche 1 bis 3, **dadurch gekennzeichnet, dass** die Widerlagerbereiche (6, 7) im Sinne eines Doppelhakens ausgebildet sind.

5. Steckvorrichtung nach einem der Ansprüche 1 bis 4, **dadurch gekennzeichnet, dass** die Widerlagerbereiche (6, 7) durch die Stirnseite (10) des Kopfteils (3) ausgebildet sind.

6. Steckvorrichtung nach einem der Ansprüche 1 bis 5, **dadurch gekennzeichnet, dass** die Widerlagerbereiche (6, 7) jeweils eine von der Steckvorrichtung weg konvergierende konische Außenfläche (11) aufweisen.

7. Steckvorrichtung nach einem der Ansprüche 1 bis 6, **dadurch gekennzeichnet, dass** die Widerlagerbereiche (6, 7) je eine Abstützfläche (12) aufweisen, die sich senkrecht zur Längsachse (L) der Steckvorrichtung erstreckt und sich im montierten Zustand gegen den rückseitigen Randbereich der Durchtrittsöffnung (1) abstützt.

8. Steckvorrichtung nach einem der Ansprüche 1 bis 7, **dadurch gekennzeichnet, dass** die Widerlagerbereiche (6, 7) je eine Zentrierfläche (13) aufweisen, die sich parallel zur Längsachse (L) erstreckt und im montierten Zustand an der Innenfläche (14) der Durchtrittsöffnung (1) anlegbar ist.

9. Steckvorrichtung nach Anspruch 7 oder 8, **dadurch gekennzeichnet, dass** die Abstützfläche (12) und / oder die Zentrierfläche (13) eine höhere Rauhigkeit aufweist als das flächige Bauteil (2).

10. Steckvorrichtung nach einem der Ansprüche 1 bis 9, **dadurch gekennzeichnet, dass** die zwischen den Widerlagerbereichen (6, 7) angeordneten Abschnitte (8, 9) eine ebene Außenfläche aufweisen.

11. Steckvorrichtung nach einem der Ansprüche 1 bis 10, **dadurch gekennzeichnet, dass** das Kopfteil (3) im montierten Zustand eine Oberseite und eine Unterseite ausbildet, dass der Widerlagerbereich (6) an der Oberseite und der Widerlagerbereich (7) an der Unterseite angeordnet sind und dass der im montierten Zustand obere Widerlagerbereich (6) weniger stark vom Kopfteil (3) abragt als der im montierten Zustand untere Widerlagerbereich (7).

12. Steckvorrichtung nach Anspruch 13, **dadurch gekennzeichnet, dass** der im montierten Zustand untere Widerlagerbereich (7) eine von der Zentrierfläche (13) aus in Richtung des Gewindeteils (4) konvergierende Führungsfläche (15) aufweist.

13. Steckvorrichtung nach einem der Ansprüche 1 bis 12, **dadurch gekennzeichnet, dass** die Steckvorrichtung Bestandteil einer Kabelverschraubung ist oder dass die Steckvorrichtung als Verschluss ausgebildet ist.

14. Steckvorrichtung nach einem der Ansprüche 1 bis 13, **dadurch gekennzeichnet, dass** die auf das Gewindeteil (4) aufschraubbare Befestigungsmutter (5) ein Linksgewinde aufweist.

15. Steckvorrichtung nach einem der Ansprüche 1 bis 17, **dadurch gekennzeichnet, dass** das Dichtmittel (22) an seiner zur Befestigungsmutter (5) weisenden Seite einen reibungsvermindernden Bestandteil (23), insbesondere in Form einer Beschichtung, aufweist.

16. Steckvorrichtung nach einem der Ansprüche 1 bis 15, **dadurch gekennzeichnet, dass** das Dichtmittel (22) und der Bereich zwischen Gewindeteil (4) und Kopfteil (3) so aufeinander abgestimmt sind, dass eine lückenlose dichte Kontaktfläche ausbildbar ist.

## Claims

1. A plug-and-socket device for installation in a through-hole (1) of a flat component (2), particularly of a switch cabinet wall, with a head part (3) for passing through the through-hole (1), with a threaded part (4) to remain in front of the through-hole (1), with a fastening nut (5) for fixing the plug-and-socket device in the edge region of the through-hole (1), which can be screwed onto the threaded part (4), wherein the head part (3) has essentially opposite counter-bearing regions (6, 7) protruding radially from the head part (3), the maximum spacing (A) of which is larger than the cross-sectional dimension (Q) of the through-hole (1),
**Characterised**
**in that** sections (8, 9) arranged between the counter-bearing regions (6, 7) are provided, the maximum spacing (B) of which is smaller than the cross-sectional dimension (Q) of the through-hole (1) and in that a sealing means (22) is provided, which in the operating position contacts both the fastening nut (5) and the flat component (2) and the region between the threaded part (4) and head part (3).

2. The plug-and-socket device according to Claim 1, **characterised in that** the head part (3) can be guided through the through-hole (1) in an inclined position.

3. The plug-and-socket device according to Claim 1 or 2, **characterised in that** the counter-bearing regions (6, 7) and the sections (8, 9) arranged between the counter-bearing regions (6, 7) are arranged perpendicularly to one another.

4. The plug-and-socket device according to one of Claims 1 to 3, **characterised in that** the counter-bearing regions (6, 7) are constructed in the manner of a double hook.

5. The plug-and-socket device according to one of Claims 1 to 4, **characterised in that** the counter-bearing regions (6, 7) are constructed by the end face (10) of the head part (3).

6. The plug-and-socket device according to one of Claims 1 to 5, **characterised in that** the counter-bearing regions (6, 7) in each case have a conical external surface (11) converging away from the plug-and-socket device.

7. The plug-and-socket device according to one of Claims 1 to 6, **characterised in that** the counter-bearing regions (6, 7) each have a support surface (12) which extends perpendicularly to the longitudinal axis (L) of the plug-and-socket device and is supported in the installed state against the rear edge region of the through-hole (1).

8. The plug-and-socket device according to one of Claims 1 to 7, **characterised in that** the counter-bearing regions (6, 7) each have a centring surface (13) which extends parallel to the longitudinal axis (L) and can be laid on the inner surface (14) of the through-hole (1) in the installed state.

9. The plug-and-socket device according to Claim 7 or 8, **characterised in that** the support surface (12) and/or the centring surface (13) has a higher roughness than the flat component (2).

10. The plug-and-socket device according to one of Claims 1 to 9, **characterised in that** the sections (8, 9) arranged between the counter-bearing regions (6, 7) have a planar external surface.

11. The plug-and-socket device according to one of Claims 1 to 10, **characterised in that** the head part (3) forms an upper side and an underside in the installed state, **in that** the counter-bearing region (6) is arranged on the upper side and the counter-bearing region (7) is arranged on the underside and **in that** the upper counter-bearing region (6) in the installed state protrudes from the head part (3) to a lesser extent than the lower counter-bearing region (7) in the installed state.

12. The plug-and-socket device according to Claim 13, **characterised in that** the lower counter-bearing region (7) in the installed state has a converging guide surface (15) converging in the direction of the threaded part (4) starting from the centring surface (13).

13. The plug-and-socket device according to one of Claims 1 to 12, **characterised in that** the plug-and-socket device is a constituent of a cable screw connection or in that the plug-and-socket device is constructed as a closure.

14. The plug-and-socket device according to one of Claims 1 to 13, **characterised in that** the fastening nut (5) which can be screwed onto the threaded part (4) has a left-handed thread.

15. The plug-and-socket device according to one of Claims 1 to 17, **characterised in that** the sealing means (22) has a friction-reducing constituent (23), particularly in the form of a coating, on its side facing the fastening nut (5).

16. The plug-and-socket device according to one of Claims 1 to 15, **characterised in that** the sealing means (22) and the region between the threaded part (4) and head part (3) are adapted to one another in such a manner that a gapless, sealed contact surface can be constructed.

## Revendications

1. Dispositif enfichable à des fins de montage dans une ouverture traversante (1) d'un composant plat (2), notamment d'une paroi d'armoire de commande, comportant une partie de tête (3) pour traverser l'ouverture traversante (1), comportant une partie de filetage (4) pour rester dans l'ouverture traversante (1), comportant un écrou de fixation (5) vissable sur la partie de filetage (4) pour immobiliser le dispositif enfichable dans la zone de bord de l'ouverture traversante (1), dans lequel la partie de tête (3) présente des zones de contre-butée (6, 7) essentiellement en vis-à-vis, faisant saillie radialement depuis la partie de tête (3), dont l'espacement (A) maximal est plus grand que la dimension de section transversale (Q) de l'ouverture traversante (1),
**caractérisé en ce que**
des portions (8, 9) disposées entre les zones de contre-butée (6, 7) sont prévues, dont l'espacement maximal (B) est plus petit que la dimension de section transversale (Q) de l'ouverture traversante (1) et **en ce que** un moyen d'étanchéité (22) est prévu, qui contacte dans la position opérationnelle tant l'écrou de fixation (5) que le composant plat (2), ainsi que la zone entre la partie de filetage (4) et la partie de tête (3).

2. Dispositif enfichable selon la revendication 1, **caractérisé en ce que** la partie de tête (3) dans la position inclinée peut être guidée à travers l'ouverture traversante (1).

3. Dispositif enfichable selon les revendications 1 ou 2, **caractérisé en ce que** les zones de contre-butée (6, 7) et les portions (8, 9) disposées entre les zones de contre-butée (6, 7) sont disposées perpendiculairement les unes aux autres.

4. Dispositif enfichable selon une des revendications 1 à 3, **caractérisé en ce que** les zones de contre-butée (6, 7) sont conçues à la manière d'un double crochet.

5. Dispositif enfichable selon une des revendications 1 à 4, **caractérisé en ce que** les zones de contre-butée (6, 7) sont réalisées par le côté frontal (10) de la partie de tête (3).

6. Dispositif enfichable selon une des revendications 1 à 5, **caractérisé en ce que** les zones de contre-butée (6, 7) présentent respectivement une surface extérieure (11) conique convergente en s'écartant du dispositif enfichable.

7. Dispositif enfichable selon une des revendications 1 à 6, **caractérisé en ce que** les zones de contre-butée (6, 7) présentent respectivement une surface d'appui (12), qui s'étend perpendiculairement à l'axe longitudinal (L) du dispositif enfichable et s'appuie en l'état monté contre la zone de bord du côté dorsale de l'ouverture traversante (1)

8. Dispositif enfichable selon une des revendications 1 à 7, **caractérisé en ce que** les zones de contre-butée (6, 7) présentent chacune une surface de centrage (13), qui s'étend parallèlement à l'axe longitudinal (L) et vient reposer en l'état monté sur la surface intérieure (14) de l'ouverture traversante (1).

9. Dispositif enfichable selon les revendications 7 ou 8, **caractérisé en ce que** la surface d'appui (12) et/ou la surface de centrage (13) présente une plus grande rugosité que le composant plat (2).

10. Dispositif enfichable selon une des revendications 1 à 9, **caractérisé en ce que** les portions (8, 9) disposées entre les zones de contre-butée (6, 7) présentent une surface extérieure plane.

11. Dispositif enfichable selon une des revendications 1 à 10, **caractérisé en ce que** la partie de tête (3) en l'état monté forme un côté supérieur et un côté inférieur, **en ce que** la zone de contre-butée (6) est disposée sur le côté supérieur et la zone de contre-butée (7) est disposée sur le côté inférieur et **en ce que** en l'état monté la zone de contre-butée supérieure (6) dépasse en saillie moins fortement de la partie de tête (3) que la zone de contre-butée inférieure (7) en l'état monté.

12. Dispositif enfichable selon la revendication 13, **caractérisé en ce que** en l'état monté la zone de contre-butée inférieure (7) présente une surface de guidage (15) convergente depuis la surface de centrage (13) dans la direction de la partie de filetage (4).

13. Dispositif enfichable selon une des revendications 1 à 12, **caractérisé en ce que** le dispositif enfichable est partie intégrante d'un vissage de câble ou que le dispositif enfichable est conçu comme une obturation.

14. Dispositif enfichable selon une des revendications 1 à 13, **caractérisé en ce que** l'écrou de fixation (5) vissable sur la partie de filetage (4) présente un filetage gauche.

15. Dispositif enfichable selon une des revendications 1 à 17, **caractérisé en ce que** le moyen d'étanchéité (22) présente sur son côté tourné vers l'écrou de fixation (5) un composant (23) réducteur de friction, notamment sous forme d'un revêtement.

16. Dispositif enfichable selon une des revendications 1 à 15, **caractérisé en ce que** le moyen d'étanchéité (22) et la zone entre la partie de filetage (4) et la partie de tête (3) sont harmonisés l'un à l'autre, de telle sorte qu'une surface de contact étanche sans vide puisse être réalisée.
